(19)

Europäisches
Patentamt
European
Patent Office
Office européen
des brevets

(11) **EP 1 834 523 A1**

(12) **EUROPEAN PATENT APPLICATION**

(43) Date of publication:
**19.09.2007 Bulletin 2007/38**

(51) Int Cl.:
***A01K 61/00*** *(2006.01)*

(21) Application number: **07101413.8**

(22) Date of filing: **30.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.03.2006 JP 2006070133**

(71) Applicant: **Shizuoka Prefecture
Shizuoka-shi
Shizuoka 420-0853 (JP)**

(72) Inventor: **Okamoto, Kazutoshi
Suruga-Bay D.S.A. Res. Center
136-24 Iwashigashima, Yaizu-shi,
Shizuoka-ken 425-0032 (JP)**

(74) Representative: **Meissner, Bolte & Partner
Postfach 10 26 05
86016 Augsburg (DE)**

(54) **Method of aquaculturing a scampi lobster and device for aquaculturing a scampi lobster**

(57)      A method of aquaculturing a scampi lobster, a device for aquaculturing a scampi lobster, and a scampi lobster aquacultured by the method or the device. The aquaculturing method comprises containing a scampi lobster (3) within a container (1), the container containing a seawater, the container being disposed in aquaculturing facilities on land, the scampi lobster being reared, cultivated, nursed, stocked or preserved, or seeds thereof being produced respectively under artificial control. According to the present invention, scampi lobsters can be effectively reared, cultivated, nursed, stocked or preserved, and seeds thereof can be effectively produced. It is possible to effectively produce scampi lobsters for release with a view to recovering and increasing the resources, and to effectively produce scampi lobsters with a view to supplying foodstuffs. It is, of course, possible to utilize the reared, cultivated, nursed, stocked or preserved scampi lobsters as foodstuffs. Also, it is possible to exhibit the reared, cultivated, nursed, stocked or preserved scampi lobsters.

Fig. 1

EP 1 834 523 A1

**Description**

BACKGROUND OF THE INVENTION

1 . Field of the Invention

The present invention relates to a method of aquaculturing a scampi lobster, a device for aquaculturing a scampi lobster, and a scampi lobster aquacultured by said method or said device.

In the present invention, a scampi lobster means a lobster of Metanephrops or Nephrops which falls under Nephropidae.

Scampi lobsters include Metanephrops andamanicus, Metanephrops arafurensis, Metanephrops armatus, Metanephrops australensis, Metanephrops binghami, Metanephrops boschmai, Metanephrops challengeri, Metanephrops formosanus, Metanephrops japonicus, Metanephrops mozambicus, Metanephrops neptunus, Metanephrops rubellas, Metanephrops sagamiensis, Metanephrops sibogae, Metanephrops sinensis, Metanephrops Thomsoni, Metanephrops velutinus, and Nephrops norvegicus.

Aquaculture or aquaculturing in the present invention includes rearing, cultivating, seed production, nursing, stocking and preserving.

2 . Description of Related Art

Scampi lobsters are worldwide popular foodstuffs called "langostino" in French or "cigala" in Spanish

Recently, scampi lobsters are overfished in the world. They need measures for the management and increase of the resources. Very little information is available on the aquaculture of the scampi lobsters. Commercial aquaculture of the scampi lobsters is not being implemented anywhere in the world. No patents are found on the aquaculture of the scampi lobsters.

It is of urgent necessity to develop technologies on the aquaculture of the scampi lobsters as means for the recovery and increase of the resources, the rearing and cultivation of release seeds, the production of seeds, and the supply of foodstuffs.

BRIEF SUMMARY OF THE INVENTION

It is an object of the invention to provide a method for effectively rearing, cultivating, nursing, stocking and preserving a scampi lobster and effectively producing seeds thereof.

It is another object of the invention to provide a device suitable for aquaculturing a scampi lobster.

It is a further object of the invention to provide a scampi lobster aquacultured by said method or by said device.

These and other objects have been achieved by the following.

The present invention is a method of aquaculturing a scampi lobster, comprising containing a scampi lobster within a container, said container containing a seawater, said container being disposed in aquaculturing facilities on land, said scampi lobster being reared, cultivated, nursed, stocked or preserved, or seeds thereof being produced respectively under artificial control.

Said seawater may be a deep seawater.

Said scampi lobster may lack a zoeal stage.

Said scampi lobster may be a Metanephrops japonicus.

The development of said scampi lobster may be one of an egg, a larva including a megalopa and a post larva, an immature including a juvenile, and an adult, said scampi lobster being obtained in nature or obtained under artificial control.

Said scampi lobster may be fed under artificial control with fishes, shellfishes, dry pellets or Artemia spp.

The development of said scampi lobster may be a larva or an immature, said scampi lobster being fed with dry pellets and/or Artemia spp.

The aquaculturing water under artificial control may be a seawater or a deep seawater run through, circulated or disposed.

The aquaculturing water under artificial control may have a temperature of 8 to 20 °C.

The development of said scampi lobster may be an adult, said aquaculturing water having a temperature of below 16 °C.

The development of said scampi lobster may be a larva or an immature, said aquaculturing water having a temperature of 14 to 18 °C.

Said container under artificial control may allow water to pass therethrough, said scampi lobster being contained within said container.

The interference between scampi lobsters may be reduced by lowering the density of said scampi lobsters contained within said container or by disposing a shelter within said container.

Said scampi lobster may be individually contained within said container.

A larval or immature scampi lobster may be individually contained within said container, said container allowing water to pass therethrough, said container being contained within another container in which Artemia spp. exist.

Larvae may be hatched from an ovigerous female scampi lobster within said container.

Eggs separated from a parent scampi lobster may be aquacultured and hatched within said container.

Said separated eggs may be kept in a floating state or a dynamic state by a stream of water moving within said container in an upward direction.

Also, the present invention is a method of aquaculturing a scampi lobster, comprising a larval or immature scampi lobster being individually contained within a container, said container allowing water and feed to pass therethrough, said container not allowing said larval or immature scampi lobster to pass therethrough, said container being contained within another container in which feed exists.

Said feed may be Artemia spp.

Further, the present invention is a device for aquaculturing a scampi lobster, comprising a container, a larval or immature scampi lobster being individually contained within said container, said container allowing water and feed to pass therethrough, said container not allowing said larval or immature scampi lobster to pass therethrough, said container being contained within another container in which feed exists.

Said feed may be Artemia spp.

Said method or said device may be further used in addition.

Further, the present invention is a scampi lobster aquacultured by said method or said device.

According to the present invention, scampi lobsters can be effectively reared, cultivated, nursed, stocked or preserved, and seeds thereof can be effectively produced. It is possible to effectively produce scampi lobsters for release with a view to recovering and increasing the resources, and to effectively produce scampi lobsters with a view to supplying foodstuffs. It is, of course, possible to utilize the reared, cultivated, nursed, stocked or preserved scampi lobsters as foodstuffs. Also, it is possible to exhibit the reared, cultivated, nursed, stocked or preserved scampi lobsters.

BRIEF DESCRIPTION OF THE DRAWINGS

Fig. 1 is a perspective view showing a container containing a scampi lobster, said container allowing water to pass therethrough.

Fig. 2 is a perspective view showing an aquaculturing device, comprising said containers being contained within another container in which feed exists.

Fig. 3 is a graph showing the relationship between the number of days after hatching and the carapace length in the aquaculture of Metanephrops japonicus.

DETAILED DESCRIPTION OF THE INVENTION

In the present invention, as mentioned above, a scampi lobster means a lobster of Metanephrops or Nephrops which falls under Nephropidae. Particularly, lobsters lacking the zoeal stage are preferably aquacultured. The lobsters lacking the zoeal stage have a high survival rate because they can be aquacultured from a developed stage.

In the present invention, Metanephrops japonicus is more preferably aquacultured. Said Metanephrops japonicus hatches as a prezoea, and mostly develops into a megalopa (post larva) within 3 hours in the absence of feed. The megalopa develops into a 1st juvenile. Therefore, said Metanephrops japonicus has a higher survival rate than scampi lobsters having a zoeal stage because said Metanephrops japonicus lacks the zoeal stage and can be aquacultured from a developed stage.

The development of the scampi lobster as an object of aquaculture under artificial control is one of an egg, a larva including a megalopa and a post larva, an immature including a juvenile, and an adult.

The scampi lobster may be obtained in nature or obtained under artificial control. Said scampi lobster obtained under artificial control may be artificially hatched from a parent, artificially hatched from an aquacultured egg, or artificially aquacultured.

Preferable feeds under artificial control include mysids, krills, shrimps, squids, clams and other shellfishes, dry pellets and Artemia spp. These feeds improve the survival and growth of the scampi lobster.

When the development of the scampi lobster is a larva or an immature, the scampi lobster is preferably fed with dry pellets and/or Artemia spp. These feeds improve the survival of the scampi lobster. The dry pellets and Artemia spp. may be used individually. The dry pellets and Artemia spp. are preferably used together to improve the survival of the scampi lobster. Particularly, the Artemia spp. should be used wherever practicable because the Artemia spp. stabilizes the survival rate of the scampi lobster.

A preferable aquaculturing water under artificial control is a seawater, a deep seawater or a mixture of them. The aquaculturing water may be run through, circulated or disposed.

The temperature and quality of the aquaculturing water in the container are stabilized by keeping constant the temperature of the aquaculturing water run, circulated or disposed, or by disposing said container within a larger container filled with a water having a temperature similar to the temperature of the aquaculturing water.

The temperature and quality of the aquaculturing water in the container are stabilized also by running the aquaculturing water through the container, circulating the aquaculturing water within the container and discharging the aquaculturing water from the container, or by replacing the aquaculturing water within the container with an aquaculturing water prepared in advance. Excretions are removed with the discharge or replacement of the aquaculturing water, or artificially removed from the container.

The aquaculturing water for the scampi lobster preferably has a temperature of 8 to 20 °C, which gives a better survival rate of the scampi lobster. Within the temperature range of 8 to 20 °C, a higher temperature gives the scampi lobster a faster growth.

When the development of the scampi lobster is an adult, the aquaculturing water having a temperature of below 16 °C improves the survival rate.

When the development of the scampi lobster is a larva or an immature, the aquaculturing water having a temperature of 14 to 18 °C improves the survival rate.

The container under artificial control preferably allows water to pass therethrough, the scampi lobster being contained within said container. When the container allows water to pass therethrough, the aquaculturing water keeps running and a fresh environment is maintained. By adjusting the size and number of the container, the group or individual control of the scampi lobster becomes easier.

The interference between scampi lobsters is reduced preferably by lowering the density of said scampi lobsters contained within the container or by disposing a shelter within the container. By reducing the interference between scampi lobsters, it is possible to remove the causes of the reduction of the survival rate, such as grapples, cannibalism and other relations between individuals.

To reduce the interference between scampi lobsters, it is most preferable to contain the scampi lobster individually within the container. The survival rate is improved by eliminating grapples, cannibalism and other relations between individuals.

A larval or immature scampi lobster is preferably individually contained within the container, said container allowing water to pass therethrough, said container being contained within another container in which Artemia spp. exists. The survival rate of the scampi lobster is improved by, in an early history in which the survival rate is low, using the Artemia spp. as a feed, containing the scampi lobster individually within the container which allows water to pass therethrough, and eliminating the relations between individuals.

In an aquaculturing method according to the present invention, larvae are hatched from an ovigerous female scampi lobster within the container. It is possible to stably secure scampi lobsters to be aquacultured by hatching larvae from an ovigerous female scampi lobster. In this case, if the interference between scampi lobsters is reduced, then less stress will be laid on the scampi lobsters, egg loss will be decreased, and more larvae will be hatched.

Eggs separated from a parent scampi lobster are aquacultured and hatched within said container. It is possible to stably secure scampi lobsters to be aquacultured by artificially aquaculturing and hatching eggs held by a dead parent or dropped from a parent.

In this case, it is desirable to adopt an upwelling egg aquaculturing method, in which separated eggs are kept in a floating state or a dynamic state by a stream of water moving within said container in an upward direction. In said upwelling egg aquaculturing method, the aquaculturing water is kept in a running state, the eggs in a dynamic state being maintained in a fresh environment, larvae being effectively hatched.

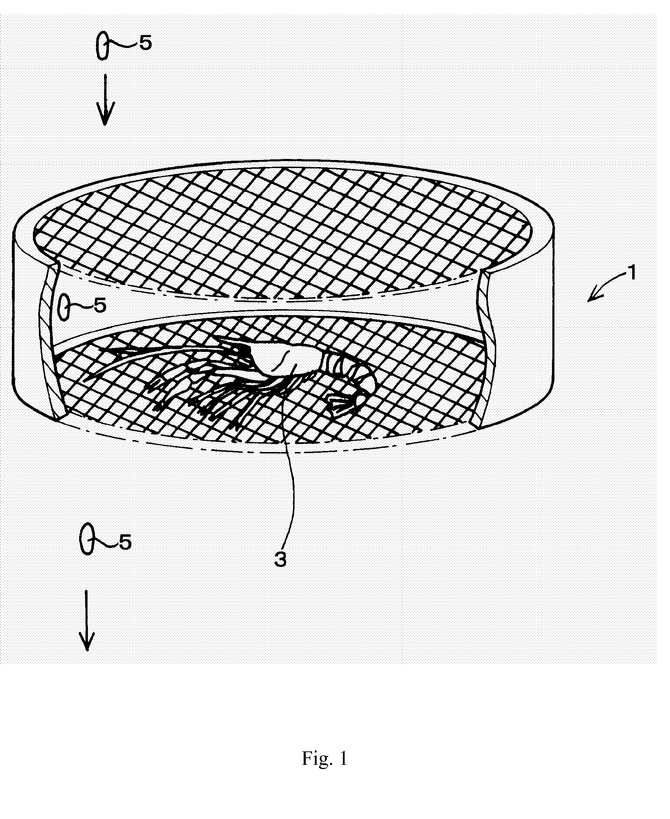

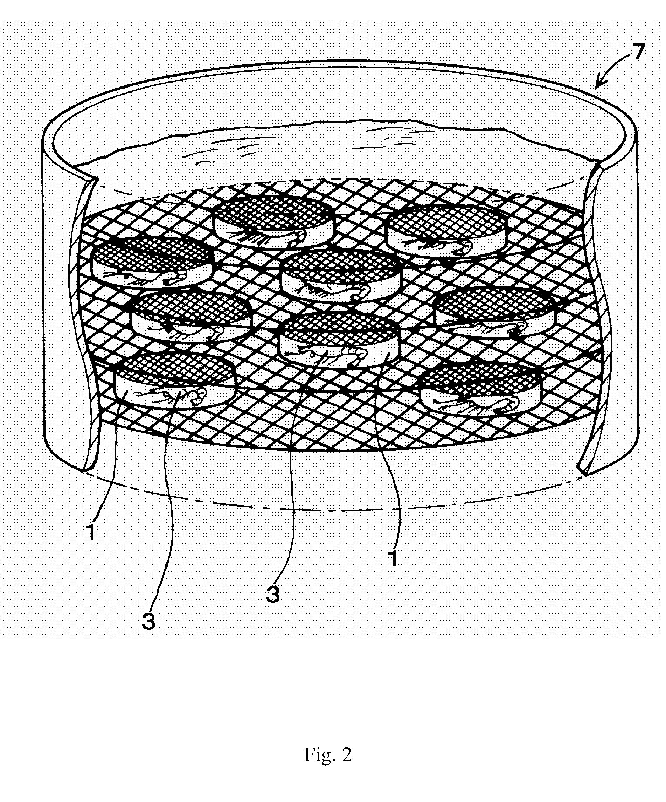

The present invention provides a device for aquaculturing a scampi lobster, comprising a container 1, a larval or immature scampi lobster 3 being individually contained within said container 1, said container 1 allowing water and feed 5 to pass therethrough, said container 1 not allowing said larval or immature scampi lobster 3 to pass therethrough, said container 1 being contained within another container 7 in which feed exists. See Fig. 1 and Fig. 2.

In said aquaculturing device, the relations between individuals are eliminated, said scampi lobster 3 eating said feed 5 which enters the container 1 from outside. A stream of water is formed by aeration, etc. to supply said feed 5 to the scampi lobster 3. If the container 1 containing each scampi lobster 3 is made as small as possible, then individual aquaculture at a high density is possible, the amount of necessary feed being minimized, the control work of feeding being very efficient.

Said feed is preferably Artemia spp. The Artemia spp. is smaller than scampi lobsters and is available almost in a uniform size. Therefore, the Artemia spp. is preferably used in the aquaculturing device of the present invention.

The aquaculturing device of the present invention makes it easy to aquaculture larval or immature scampi lobsters.

Further, the present invention provides a method of aquaculturing a scampi lobster, wherein the above-mentioned method or device is further used in addition thereto. Using various methods and devices in combination makes it possible to aquaculture scampi lobsters efficiently.

Thus, the present invention enables the aquaculture of scampi lobsters. For example, 4th juvenile scampi lobsters can be produced in 2 to 3 months after hatching, the survival rate being 40 to 80 %. Scampi lobsters having a commercial size (carapace length of 45 mm) can be produced in 2 years after hatching, the survival rate being 10 to 20 %.

The present invention provides scampi lobsters aquacultued by the above-mentioned method. Scampi lobsters thus obtained have a wide range of application. For example, they are used as release seeds for the recovery and increase of resources, as seeds for nursery or stocking, as foodstuff, or for display.

The scampi lobster aquacultured in the present invention is preferably a Metanephrops japonicus. The Metanephrops japonicus lives in a sandy bottom at depths of 200 to 400 meters off the coast of Japan from Kanto area to Kyushu area. The Metanephrops japonicus is an expensive edible scampi lobster having a body length of about 20 cm. The Metanephrops japonicus has sizes as follows according to the development thereof. The egg diameter is about 2 to 4 mm. The carapace length is about 3 mm for prezoea, about 3 to 4 mm for megalopa, about 4 to 5 mm for 1st juvenile, about 6 to 8 mm for 4th juvenile, about 15 to 19 mm for 10th juvenile, and about 45 to 80 mm for adult.

Seawater is composed of a surface seawater at depths of below 100 meters and a deep seawater at depths of above 100 meters. The seawater in the present invention is drawn up from the sea and used on the ground. The surface seawater used in the present invention is, for example, drawn from Suruga Bay at depths of 10 to 30 meters. The deep seawater used in the present invention is, for example, drawn from Suruga Bay at depths of 300 to 700 meters.

Experiments made by the inventor, etc. will now be described. It is to be noted that the present invention is not limited to the experiments.

EXPERIMENT 1

Aquaculturing adults at different water temperatures

<Materials and Method>

26 ovigerous female scampi lobsters captured in Suruga Bay were used in the experiment. Three experimental sections were prepared, which had water temperature conditions of 10 (8.6 to 10.7) °C, 14 (13 to 16.3) °C, and 18 (16 to 18.4) °C.

Aquaculturing containers, each having a capacity of 20 liters, were disposed respectively within three 1.5-ton tanks, each of said aquaculturing containers allowing water to pass therethrough. 1 Metanephrops japonicus was put into each of said aquaculturing containers each having a capacity of 20 liters. 9 Metanephrops japonicus were aquacultured in the 10 °C experimental section. 11 Metanephrops japonicus were aquacultured in the 14 °C experimental section. 6 Metanephrops japonicus were aquacultured in the 18 °C experimental section.

Aquaculturing water used in each of the three experimental sections was a deep seawater. By supplying water to each 1.5-ton tank so that water therein is exchanged at a rate of about 10 times per day, the water temperature in each tank was adjusted to its temperature range mentioned above, and water was continuously flowing through each aquaculturing container.

The scampi lobsters were aquacultured for 200 days. They were sufficiently fed every other day with frozen sergestid shrimps. Residual feed, etc. were removed every day. The survival, etc. of the scampi lobsters were watched.

<Results>

The survival rates of the scampi lobsters in 100 days after the experiment was started were as follows: 100 % in the 10 °C experimental section, 100 % in the 14 °C experimental section, and 83.3 % in the 18 °C experimental section. The survival rates of the scampi lobsters in 200 days after the experiment was started were as follows: 77.8 % in the 10 °C experimental section, 81.8 % in the 14 °C experimental section, and 0 % in the 18 °C experimental section. This means that when the scampi lobsters were aquacultured for a period of more than 6 months, they had good survival rates at water temperatures below 16 °C.

EXPERIMENT 2

Aquaculturing adults and hatching larvae

<Materials and Method>

41 ovigerous female scampi lobsters captured in Suruga Bay were used in the experiment. Two experimental sections, which were a deep seawater experimental section and a surface seawater experimental section, were prepared. Aquaculturing containers, each having a capacity of 20 liters, were disposed respectively within two 1.5-ton tanks, each of said aquaculturing containers allowing water to pass therethrough. 1 Metanephrops japonicus was put into each of said aquaculturing containers each having a capacity of 20 liters. 14 Metanephrops japonicus were aquacultured in the deep seawater experimental section. 27 Metanephrops japonicus were aquacultured in the surface seawater experimental section.

By supplying water to each 1.5-ton tank so that water therein is exchanged at a rate of about 10 times per day, the water temperature in each tank was adjusted to 15 (12.1 to 17) °C, and water was continuously flowing through each aquaculturing container.

The scampi lobsters were aquacultured for 200 days. They were sufficiently fed every other day with frozen sergestid shrimps. Residual feed, etc. were removed every day. The survival, etc. of the scampi lobsters were watched.

<Results>

The survival rates of the scampi lobsters in 100 days after the experiment was started were as follows: 92.9 % in the deep seawater experimental section, and 81.5 % in the surface seawater experimental section. The survival rates of the scampi lobsters in 200 days after the experiment was started were as follows: 85.7 % in the deep seawater experimental section, and 40.7 % in the surface seawater experimental section. This means that, both in the deep seawater experimental section and in the surface seawater experimental section, it was possible to aquaculture the scampi lobsters for a period of more than 6 months.

Larvae hatched in April to July. The number of larvae hatching females and the rate of hatching, which is obtained by dividing the number of larvae hatching females by the number of females at the start of the experiment, were as follows: 10 (71.4 %) in the deep seawater experimental section, and 9 (33.3 %) in the surface seawater experimental section. Larvae hatched both in the deep seawater experimental section and in the surface seawater experimental section.

The average numbers of larvae hatched per female were as follows: 143.2 in the deep seawater experimental section, and 149.8 in the surface seawater experimental section.

EXPERIMENT 3

Aquaculturing eggs

<Materials and Method>

60 eye-pigment stage eggs of Metanephrops japonicus separated from an ovigerous female scampi lobster were used in the experiment. Two experimental sections, which were an upwelling experimental section and a beaker experimental section, were prepared.

In the upwelling experimental section, eggs were aquacultured in an upwelling environment within a plastic aquaculturing container having a capacity of 6 liters, a diameter of 15 cm and a height of 45 cm. Said upwelling environment was obtained by supplying water to a lower portion of the container and removing the water from an upper portion of the container. 40 eggs were contained within the aquaculturing container. In the container, the eggs were kept moving up and down in balance by their gravity and the upwelling, without being moved out of the container.

In the beaker experimental section, 20 eggs were contained within a beaker having a capacity of 1 liter. The beaker was slightly ventilated. Water in the beaker was exchanged every other day by moving the eggs in the beaker to another beaker prepared in advance.

In both of the upwelling experimental section and the beaker experimental section, a deep seawater was used and adapted to have an average temperature of 15.0 °C.

<Results>

Larvae hatched in 20 to 26 days after the experiment was started. The rates of hatching of the larvae were as follows: 95.0 % in the upwelling experimental section, and 20.0 % in the beaker experimental section. The rates of hatching were very high particularly when the eggs were aquacultured in said upwelling environment.

EXPERIMENT 4

Aquaculturing megalopas at different temperatures

<Materials and Method>

28 Metanephrops japonicus megalopas hatched from an ovigerous female scampi lobster were used in the experiment. Seven experimental sections as follows were prepared: a 4 (4.3 on the average) °C experimental section, an 8 (7.8 on the average) °C experimental section, a 13 (12.8 on the average) °C experimental section, a 15 (15.2 on the average) °C experimental section, a 17 (16.5 on the average) °C experimental section, a 20 (19.7 on the average) °C experimental section, and a 23 (22.7 on the average) °C experimental section. 1 beaker having a capacity of 1 liter was used in each experimental section. 4 magalopas were aquacultured in each beaker.
Feeds were Artemia spp. nauplii and finely chopped muscles of sergestid shrimps. Aquaculturing water was a surface seawater. The temperature of the water was adjusted by means of a water bath. The water was slightly ventilated. The water was exchanged every other day by moving the living things in the beaker to another beaker prepared in advance. Survival and ecdysis were watched almost every day.

<Results>

In the 8 to 20 °C experimental sections, the magalopas changed into 1st juveniles. In the 8 °C experimental section, 1 (25.0 %) megalopa changed into a 1st juvenile. In the 13 °C experimental section, 1 (25.0 %) megalopa changed into a 1st juvenile. In the 15 °C experimental section, 2 (50.0 %) megalopas changed into 1st juveniles. In the 17 °C experimental section, 3 (75.0 %) megalopas changed into 1st juveniles. In the 20 °C experimental section, 1 (25.0 %) megalopa changed into a 1st juvenile.

EXPERIMENT 5

Aquaculturing megalopas and immature scampi lobsters at different temperatures

<Materials and Method>

38 Metanephrops japonicus megalopas hatched from an ovigerous female scampi lobster were used in the experiment. Four experimental sections as follows were prepared: an 8 (8.8 on the average) °C experimental section, a 10 (9.8 on the average) °C experimental section, a 14 (14.5 on the average) °C experimental section, and a 18 (18.0 on the average) °C experimental section.
6 beakers, each having a capacity of 1 liter, were used in the 8 °C experimental section. 6 beakers, each having a capacity of 1 liter, were used in the 10 °C experimental section. 16 beakers, each having a capacity of 1 liter, were used in the 14 °C experimental section. 10 beakers, each having a capacity of 1 liter, were used in the 18 °C experimental section. 1 megalopa was contained in each of these beakers. Thus, 6 to 16 megalopas were aquacultured in the experimental sections.
Feeds were Artemia spp. nauplii and finely chopped muscles of sergestid shrimps. Aquaculturing water in all of the four experimental sections was a deep seawater. The water was slightly ventilated. The water was exchanged every other day by moving the living things in the beaker to another beaker prepared in advance. Survival and ecdysis were watched almost every day. After the megalopas changed into juveniles, aquaculturing was continued in the same way as the melalopas until they changed into 3rd juveniles.

<Results>

In all of the four experimental sections, the magalopas changed into 1st juveniles. In the 8 °C experimental section, 4 (66.7 %) megalopas changed into 1st juveniles. In the 10 °C experimental section, 6 (100.0 %) megalopas changed into 1st juveniles. In the 14 °C experimental section, 16 (100.0 %) megalopas changed into 1st juveniles. In the 18 °C experimental section, 10 (100.0 %) megalopas changed into 1st juveniles.
In the 8 °C experimental section, 4 (66.7 %) megalopas changed into 3rd juveniles. In the 10 °C experimental section, 4 (66.7 %) megalopas changed into 3rd juveniles. In the 14 °C experimental section, 15 (93.8 %) megalopas changed into 3rd juveniles. In the 18 °C experimental section, 10 (100.0 %) megalopas changed into 3rd juveniles.

The megalopas changed into 1st juveniles in the average days as follows after the experiment was started: 40.8 (37 to 47) days in the 8 °C experimental section, 30.8 (30 to 32) days in the 10 °C experimental section, 15.2 (14 to 17) days in the 14 °C experimental section, and 12.4 (12 to 13) days in the 18 °C experimental section.

The megalopas changed into 3rd juveniles in the average days as follows after the experiment was started: 142.8 (133 to 150) days in the 8 °C experimental section, 121.8 (115 to 131) days in the 10 °C experimental section, 57.3 (55 to 60) days in the 14 °C experimental section, and 48.2 (45 to 52) days in the 18 °C experimental section.

The megalopas and juveniles grew in a shorter period of time as the water temperature was higher. In view of the survival and growth, preferable water temperatures were 14 to 18 °C.

EXPERIMENT 6

Aquaculturing megalopas and immature scampi lobsters by different feeds (1)

<Materials and Method>

40 Metanephrops japonicus megalopas hatched from an ovigerous female scampi lobster were used in the experiment. Four experimental sections as follows were prepared: an Artemia spp. nauplii experimental section, a sergestid shrimp muscle experimental section, a mysid experimental section, and an assorted feed experimental section.

10 beakers, each having a capacity of 1 liter, were used in each of the experimental sections. 1 larva was contained in each beaker. 10 larvae were aquacultured in each of the experimental sections.

In each of the experimental sections, a surface seawater was used as aquaculturing water. The surface seawater was adjusted to have an average temperature of 15.2 °C by means of a water bath. The water was slightly ventilated. The water was exchanged every other day by moving the living things in the beaker to another beaker prepared in advance. Survival and ecdysis were watched almost every day. After the larvae changed into juveniles, aquaculturing was continued in the same way as the magalopas until they changed into 4th juveniles.

<Results>

In all of the four experimental sections, the magalopas changed into 1st juveniles in 16 to 19 days after the experiment was started. In the Artemia spp. nauplii experimental section, 10 (100.0 %) megalopas changed into 1st juveniles. In the sergestid shrimp muscle experimental section, 9 (90.0 %) megalopas changed into 1st juveniles. In the mysid experimental section, 6 (60.0 %) megalopas changed into 1st juveniles. In the assorted feed experimental section, 10 (100.0 %) megalopas changed into 1st juveniles.

In the Artemia spp. nauplii experimental section, 8 (80.0 %) megalopas changed into 4th juveniles. In the sergestid shrimp muscle experimental section, 3 (30.0 %) megalopas changed into 4th juveniles. In the mysid experimental section, 2 (20.0 %) megalopas changed into 4th juveniles. In the assorted feed experimental section, 7 (70.0 %) megalopas changed into 4th juveniles.

The megalopas changed into 4th juveniles in the average days as follows after the experiment was started: 95.4 (89 to 106) days in the Artemia spp. nauplii experimental section, 86.3 (85 to 89) days in the sergestid shrimp muscle experimental section, 91.0 (85 to 97) days in the mysid experimental section, and 105.1 (93 to 114) days in the assorted feed experimental section.

In all of the four experimental sections, the megalopas changed into juveniles. In view of the survival rate until 4th juveniles, Artemia spp. nauplii and assorted feeds were effective as initial feeds.

EXPERIMENT 7

Aquaculturing megalopas and immature scampi lobsters by different feeds (2)

<Materials and Method>

30 Metanephrops japonicus megalopas hatched from an ovigerous female scampi lobster were used in the experiment. Three experimental sections as follows were prepared: an Artemia spp. nauplii experimental section, an assorted feed experimental section, and an Artemia spp. nauplii and assorted feed experimental section.

10 beakers, each having a capacity of 1 liter, were used in each of the experimental sections. 1 larva was contained in each beaker. 10 larvae were aquacultured in each of the experimental sections.

In each of the experimental sections, a deep seawater was used as aquaculturing water. The deep seawater was adjusted to have an average temperature of 15.1 °C by means of a water bath. The water was slightly ventilated. The water was exchanged every other day by moving the living things in the beaker to another beaker prepared in advance. Survival and ecdysis were watched almost every day. After the larvae changed into juveniles, aquaculturing was continued in the same way as the magalopas until they changed into 4th juveniles.

<Results>

In all of the three experimental sections, the magalopas changed into 1st juveniles in 15 to 20 days after the experiment was started. In the Artemia spp. nauplii experimental section, 10 (100.0 %) megalopas changed into 1st juveniles. In the assorted feed experimental section, 10 (100.0 %) megalopas changed into 1st juveniles. In the Artemia spp. nauplii and assorted feed experimental section, 10 (100.0 %) megalopas changed into 1st juveniles.

In the Artemia spp. nauplii experimental section, 9 (90.0 %) megalopas changed into 4th juveniles. In the assorted feed experimental section, 6 (60.0 %) megalopas changed into 4th juveniles. In the Artemia spp. nauplii and assorted feed experimental section, 8 (80.0 %) megalopas changed into 4th juveniles.

The megalopas changed into 4th juveniles in the average days as follows after the experiment was started: 85.3 (78 to 97) days in the Artemia spp. nauplii experimental section, 94.5 (88 to 104) days in the assorted feed experimental section, and 78.4 (76 to 86) days in the Artemia spp. nauplii and assorted feed experimental section.

Artemia spp. nauplii and assorted feed were favorable feeds. When both the Artemia spp. nauplii and assorted feed were used, they had a favorable effect on the growth of juveniles.

EXPERIMENT 8

Aquaculturing megalopas at different densities

<Materials and Method>

31 Metanephrops japonicus megalopas hatched from an ovigerous female scampi lobster were used in the experiment. Five experimental sections as follows were prepared according to the density per liter of the Metanephrops japonicus megalopas: a 0.5 individual experimental section, a 1 individual experimental section, a 1.5 individual experimental section, a 4 individual experimental section, and a 7.5 individual experimental section.

In the 0.5 individual experimental section, 1 megalopa was contained in each of 3 finger bowls, each having a capacity of 2 liters, a total of 3 megalopas being aquacultured.

In the 1 individual experimental section, 2 megalopas were aquacultured in 1 finger bowl having a capacity of 2 liters.

In the 1.5 individual experimental section, 3 megalopas were aquacultured in 1 finger bowl having a capacity of 2 liters.

In the 4 individual experimental section, 8 megalopas were aquacultured in 1 finger bowl having a capacity of 2 liters.

In the 7.5 individual experimental section, 15 megalopas were aquacultured in 1 finger bowl having a capacity of 2 liters.

In each of the experimental sections, both Artemia spp. nauplii and sergestid shrimp muscles were used as feeds.

In each of the experimental sections, a surface seawater was used as aquaculturing water. The surface seawater was adjusted to have an average temperature of 15.2 °C by means of a water bath. The water was slightly ventilated. The water was exchanged every other day by moving the megalopas in the bowl to another bowl prepared in advance. Survival and ecdysis were watched almost every day.

<Results>

In all of the five experimental sections, the magalopas changed into 1st juveniles in 15 to 17 days after the experiment was started. In the 0.5 individual experimental section, 3 (100.0 %) megalopas changed into 1st juveniles. In the 1 individual experimental section, 2 (100.0 %) megalopas changed into 1st juveniles. In the 1.5 individual experimental section, 3 (100.0 %) megalopas changed into 1st juveniles. In the 4 individual experimental section, 3 (37.5 %) megalopas changed into 1st juveniles. In the 7.5 individual experimental section, 3 (20.5 %) megalopas changed into 1st juveniles. The survival rate was high in densities of 1.5 and below. The survival rate decreased as the density increased.

EXPERIMENT 9

Aquaculturing megalopas and immature scampi lobsters at different densities

<Materials and Method>

107 Metanephrops japonicus megalopas hatched from an ovigerous female scampi lobster were used in the experiment. Three experimental sections as follows were prepared: a low-density experimental section having a density of 1 individual per liter, a medium-density experimental section having a density of 4.5 individuals per liter, and a high-density experimental section having a density of 14 individuals per liter.

In the low-density experimental section, 1 megalopa was contained in each beaker having a capacity of 1 liter, a total of 10 megalopas being aquacultured.

In the medium-density experimental section, 27 megalopas were aquacultured in 1 tank having a capacity of 6 liters.

In the high-density experimental section, 70 megalopas were contained in 1 tank having a capacity of 5 liters.

In each of the experimental sections, both Artemia spp. nauplii and assorted feed were used as feeds.

In each of the experimental sections, a deep seawater was used as aquaculturing water. The deep seawater was adjusted to have an average temperature of 15.1 °C by means of a water bath. The water was slightly ventilated. The water was exchanged every other day by moving the living things in the beaker to another beaker prepared in advance. Survival and ecdysis were watched almost every day. The immature scampi lobsters were aquacultured in the same way as the megalopas for 60 days after hatching.

<Results>

In all of the three experimental sections, the magalopas changed into 1st juveniles in 15 to 18 days after the experiment was started. In the low-density experimental section, 8 (80.0 %) megalopas changed into 1st juveniles. In the medium-density experimental section, 2 (7.4 %) megalopas changed into 1st juveniles. In the high-density experimental section, 5 (7.1 %) megalopas changed into 1st juveniles. In the low-density experimental section, 8 (80.0 %) megalopas changed into 3rd juveniles. In the medium-density experimental section, 1 (3.7 %) megalopa changed into a 3rd juvenile. In the high-density experimental section, 1 (1.4 %) megalopa changed into a 3rd juvenile. Low density had a favorable effect on the survival of juveniles.

EXPERIMENT 10

Aquaculturing megalopas and immature scampi lobsters with and without a shelter

<Materials and Method>

194 Metanephrops japonicus megalopas hatched from an ovigerous female scampi lobster were used in the experiment. The experiment was carried out in two cases: case 1 and case 2.

In the case 1, two square-shaped tanks having a capacity of 6 liters were used. One of the two square-shaped tanks had a latticed shelter, the other not having a shelter. In each of the two square-shaped tanks, 27 megalopas were aquacultured.

In the case 2, two cylindrical tanks having a capacity of 5 liters were used. One of the two cylindrical tanks had a netted shelter, the other not having a shelter. In each of the two cylindrical tanks, 70 megalopas were aquacultured.

In each of the two cases, both Artemia spp. nauplii and assorted feed were used as feeds.

In each of the two cases, a deep seawater was used as aquaculturing water. The deep seawater was adjusted to have an average temperature of 15.1 °C by means of a water bath. The water was slightly ventilated. The water was exchanged every other day by moving the living things in each tank to another tank prepared in advance. Survival and ecdysis were watched almost every day. The immature scampi lobsters were aquacultured in the same way as the megalopas for 60 days after hatching.

<Results>

In each of the two cases, the magalopas changed into 1st juveniles in 15 to 18 days after the experiment was started. In the case 1 in which the tank had the shelter, 5 (19 %) megalopas changed into 1st juveniles. In the case 1 in which the tank did not have the shelter, 2 (7.4 %) megalopas changed into 1st juveniles. In the case 2 in which the tank had the shelter, 13 (19.0 %) megalopas changed into 1st juveniles. In the case 2 in which the tank did not have the shelter, 5 (7.1 %) megalopas changed into 1st juveniles.

In the case 1 in which the tank had the shelter, 3 (11.0 %) megalopas changed into 3rd juveniles. In the case 1 in which the tank did not have the shelter, 1 (3.7 %) megalopa changed into a 3rd juvenile. In the case 2 in which the tank had the shelter, 4 (5.7 %) megalopas changed into 3rd juveniles. In the case 2 in which the tank did not have the shelter, 1 (1.4 %) megalopa changed into a 3rd juvenile. The shelter had a favorable effect on the survival of juveniles.

EXPERIMENT 11

Aquaculturing megalopas and immature scampi lobsters by different containers containing different numbers of individuals

<Materials and Method>

215 Metanephrops japonicus megalopas hatched from an ovigerous female scampi lobster were used in the experiment. Three experimental sections as follows were prepared: a beaker experimental section, a capsule chamber experimental section, and a tank experimental section.

In the beaker experimental section, 1 megalopa was contained in each beaker having a capacity of 1 liter, a total of 10 megalopas being aquacultured (1 individual per liter).

In the capsule chamber experimental section, 1 megalopa was contained in each capsule chamber (container for tissue sections having a capacity of 0.008 liter, a diameter of 35 mm, a height of 8 mm, and a mesh size of 2 mm, allowing water to pass therethrough), a total of 175 megalopas being aquacultured (125 individuals per liter). The capsule chambers were contained within a cylindrical tank having a capacity of 5 liters.

In the tank experimental section, 30 megalopas were contained within 1 container having a capacity of 35 liters (0.86 individual per liter).

Artemia spp. nauplii were used as a feed. In the capsule chamber experimental section, Artemia spp. nauplii were put into the tank within which the capsule chambers were contained.

In each of the three experimental sections, a deep seawater was used as aquaculturing water. The deep seawater was adjusted to have an average temperature of 15.1 °C by means of a water bath. The water was slightly ventilated. The water was exchanged every other day by moving the living things in containing means or the capsule chambers within which the living things were contained to another containing means or another tank for containing the capsule chambers prepared in advance. Survival and ecdysis were watched almost every day.

The immature scampi lobsters were aquacultured in the same way as the megalopas for 40 days after hatching.

<Results>

In each of the three experimental sections, the magalopas changed into 1st juveniles in 15 to 18 days after the experiment was started. In the beaker experimental section, 9 (90.0 %) megalopas changed into 1st juveniles. In the capsule chamber experimental section, 148 (85.0 %) megalopas changed into 1st juveniles. In the tank experimental section, 15 (50.0 %) megalopas changed into 1st juveniles.

In the beaker experimental section, 8 (80.0 %) megalopas changed into 2nd juveniles. In the capsule chamber experimental section, 101 (57.7 %) megalopas changed into 2nd juveniles. In the tank experimental section, 2 (6.7 %) megalopas changed into 2nd juveniles.

Even if the density was high, the survival rate was high as long as the living things were aquacultured individually. By using the capsule chambers allowing water to pass therethrough, it was easy to aquaculture the living things in quantities at an initial stage of growth.

EXPERIMENT 12

Aquaculturing megalopas and immature scampi lobsters to estimate survival and growth

<Materials and Method>

10 Metanephrops japonicus megalopas hatched from an ovigerous female scampi lobster were used in the experiment. Both Artemia spp. nauplii and sergestid shrimp muscles were used as feeds.

1 megalopa was contained in a beaker having a capacity of 1 liter, a total of 10 megalopas being aquacultured.

A surface seawater was used as aquaculturing water. The temperature of the surface seawater was adjusted by means of a water bath. The water was slightly ventilated. The water was exchanged every other day by moving the living things in each beaker to another beaker prepared in advance. Survival and ecdysis were watched almost every day.

The immature scampi lobsters were aquacultured in the same way as the megalopas after hatching.

Immature scampi lobsters, after being grown to 4th or 5th juveniles, were contained in a plastic cage (a mesh size of 5 mm, a top opening about 15 cm square, a depth of 10 cm) which was disposed within a tank, said lobsters being aquacultured in running water. A surface seawater was used as aquaculturing water. The surface seawater was poured into the tank about 2 times per hour.

The lobsters were sufficiently fed every day with frozen sergestid shrimp muscles. Residual feed, dead lobsters, exuvia, etc. were removed every day. Aquaculturing continued for a period of 600 days after hatching. The temperature of the water was adjusted to 15.5 (14.2 to 17.2) °C.

<Results>

Survival rates were as follows:

    50 days after aquaculturing was started: 70 %
    100 days after aquaculturing was started: 40 %
    200 days after aquaculturing was started: 20 %
    300 days after aquaculturing was started: 20 %
    400 days after aquaculturing was started: 10 %
    500 days after aquaculturing was started: 10 %
    600 days after aquaculturing was started: 10 %

The survival rates in 200 days and thereafter were stable and 10 to 20 %. The megalopas exuviated 15 times and grew to have a carapace length of 33.8 mm.

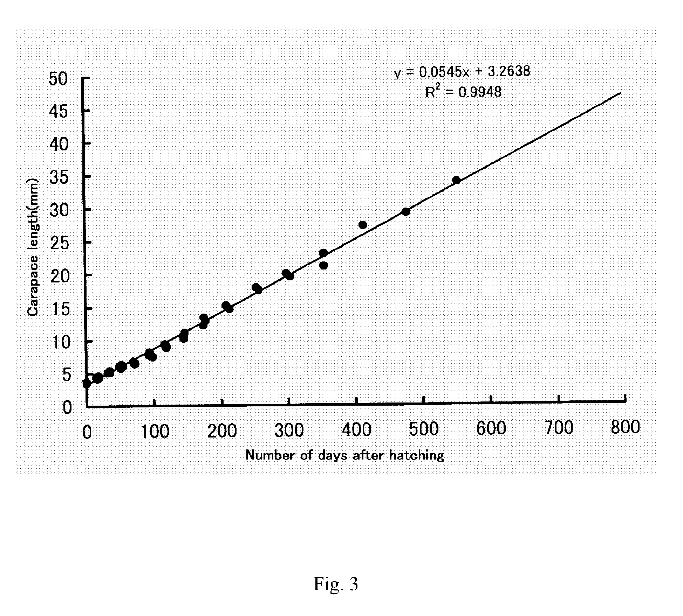

Fig. 3 shows the relationship between the number of days after hatching and the carapace length. The relationship between the number of days (x) and the carapace length (y) is formulized by an equation of regression as follows:

$$y = 0.0545x + 3.2638 \ (R^2 = 0.9948, \ n = 61)$$

It is presumed from this equation that it takes 766 days, or about 2 years, from hatching to have a carapace length of 45 mm which is a commercial size.

As many apparently widely different embodiments of the present invention may be made without departing from the spirit and scope thereof, it is to be understood that the invention is not limited to the specific embodiments thereof except as defined in the appended claims.

**Claims**

1. A method of aquaculturing a scampi lobster, comprising containing a scampi lobster within a container, said container containing a seawater, said container being disposed in aquaculturing facilities on land, said scampi lobster being reared, cultivated, nursed, stocked or preserved, or seeds thereof being produced respectively under artificial control.

2. A method of aquaculturing a scampi lobster as claimed in claim 1, wherein said seawater is a deep seawater.

3. A method of aquaculturing a scampi lobster as claimed in claim 1 or 2, wherein said scampi lobster lacks a zoeal stage.

4. A method of aquaculturing a scampi lobster as claimed in claim 1 or 2, wherein said scampi lobster is a Metanephrops japonicus.

5. A method of aquaculturing a scampi lobster as claimed in any one of claims 1 to 4, wherein the development of said scampi lobster is one of an egg, a larva including a megalopa and a post larva, an immature including a juvenile, and an adult, said scampi lobster being obtained in nature or obtained under artificial control.

6. A method of aquaculturing a scampi lobster as claimed in any one of claims 1 to 5, wherein said scampi lobster is fed under artificial control with fishes, shellfishes, dry pellets or Artemia spp.

7. A method of aquaculturing a scampi lobster as claimed in claim 6, wherein the development of said scampi lobster is a larva or an immature, said scampi lobster being fed with dry pellets and/or Artemia spp.

8. A method of aquaculturing a scampi lobster as claimed in any one of claims 1 to 4, wherein the aquaculturing water under artificial control is a seawater or a deep seawater run, circulated or disposed.

9. A method of aquaculturing a scampi lobster as claimed in any one of claims 1 to 4, wherein the aquaculturing water under artificial control has a temperature of 8 to 20 °C.

10. A method of aquaculturing a scampi lobster as claimed in claim 9, wherein the development of said scampi lobster is an adult, said aquaculturing water having a temperature of below 16 °C.

11. A method of aquaculturing a scampi lobster as claimed in claim 9, wherein the development of said scampi lobster is a larva or an immature, said aquaculturing water having a temperature of 14 to 18 °C.

12. A method of aquaculturing a scampi lobster as claimed in any one of claims 1 to 4, wherein said container under artificial control allows water to pass therethrough, said scampi lobster being contained within said container.

13. A method of aquaculturing a scampi lobster as claimed in any one of claims 1 to 4, wherein the interference between scampi lobsters is reduced by lowering the density of said scampi lobsters contained within said container or by disposing a shelter within said container.

14. A method of aquaculturing a scampi lobster as claimed in any one of claims 1 to 4, wherein said scampi lobster is individually contained within said container.

15. A method of aquaculturing a scampi lobster as claimed in any one of claims 1 to 4, wherein a larval or immature scampi lobster is individually contained within said container, said container allowing water to pass therethrough, said container being contained within another container in which Artemia spp. exists.

16. A method of aquaculturing a scampi lobster as claimed in any one of claims 1 to 4, wherein larvae are hatched from an ovigerous female scampi lobster within said container.

17. A method of aquaculturing a scampi lobster as claimed in any one of claims 1 to 4, wherein eggs separated from a parent scampi lobster are aquacultured and hatched within said container.

18. A method of aquaculturing a scampi lobster as claimed in claim 17, wherein said separated eggs are kept in a floating state or a dynamic state by a stream of water moving within said container in an upward direction.

19. A method of aquaculturing a scampi lobster, comprising a larval or immature scampi lobster being individually contained within a container, said container allowing water and feed to pass therethrough, said container not allowing said larval or immature scampi lobster to pass therethrough, said container being contained within another container in which feed exists.

20. A method of aquaculturing a scampi lobster as claimed in claim 19, wherein said feed is Artemia spp.

21. A device for aquaculturing a scampi lobster, comprising a container, a larval or immature scampi lobster being individually contained within said container, said container allowing water and feed to pass therethrough, said container not allowing said larval or immature scampi lobster to pass therethrough, said container being contained within another container in which feed exists.

22. A device for aquaculturing a scampi lobster as claimed in claim 21, wherein said feed is Artemia spp.

23. A method of aquaculturing a scampi lobster as claimed in any one of claims 1 to 4, wherein said method claimed in any one of claims 5 to 20 or said device claimed in claim 21 or 22 is further used in addition thereto.

24. A scampi lobster aquacultured by said method claimed in any one of claims 1 to 20 and 23.

Fig. 1

Fig. 2

Fig. 3

**European Patent Office**

## PARTIAL EUROPEAN SEARCH REPORT

which under Rule 45 of the European Patent Convention shall be considered, for the purposes of subsequent proceedings, as the European search report

Application Number

EP 07 10 1413

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE BIOSIS [Online] BIOSCIENCES INFORMATION SERVICE, PHILADELPHIA, PA, US; June 2001 (2001-06), ROTLLANT GUIOMAR ET AL: "Effects of diet on Nephrops norvegicus (L.) larval and postlarval development, growth, and elemental composition" XP002439145 Database accession no. PREV200200359847 | 1,5-7, 9-11,23 | INV. A01K61/00 |
| Y | * abstract *<br><br>& JOURNAL OF SHELLFISH RESEARCH, vol. 20, no. 1, June 2001 (2001-06), pages 347-352, ISSN: 0730-8000<br>----- | 8,12-15, 19,20,22 | |
| X | US 4 007 709 A (WISHNER FREDERICK B) 15 February 1977 (1977-02-15) * column 1, lines 7-27 * * column 1, line 53 - column 2, line 40 * * figures 1,2,4-6 * | 21 | |
| Y | | 8,12-15, 19,20,22 | TECHNICAL FIELDS SEARCHED (IPC)<br><br>A01K |

-----

-/--

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 25 June 2007 | Been, Mathieu |

EPO FORM 1503 03.82 (P04C07)

# EP 1 834 523 A1

| | European Patent Office | **PARTIAL EUROPEAN SEARCH REPORT** | Application Number EP 07 10 1413 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/036987 A (DRENGSTIG TORMOD [NO]; DRENGSTIG ASBJOERN [NO]; KOLLSGAARD IVAR [NO]) 6 May 2004 (2004-05-06) <br> * page 1, line 2 - page 2, line 4 * <br> * page 2, line 21 - page 3, line 16 * <br> * page 6, lines 7-14 * <br> * page 8, line 12 - page 9, line 21 * <br> * page 13, lines 1-24 * <br> * figures 1,3,5,6 * | 21 | |
| A | | 1,5-9, 12-15, 19,20 | |
| | ----- | | |
| X | WO 03/026406 A (JABLONSKY VIKTOR [AU]) 3 April 2003 (2003-04-03) <br> * page 3, line 4 - page 4, line 19 * <br> * page 5, line 4 - page 6, line 7 * <br> * page 8, lines 13-25 * <br> * figures 1a,1b,2,3 * | 21 | TECHNICAL FIELDS SEARCHED (IPC) |
| A | | 1,2,5-8, 12-15, 19,20 | |
| | ----- | | |

EPO FORM 1503 03.82 (P04C10)

**European Patent Office**

**INCOMPLETE SEARCH SHEET C**

Application Number

EP 07 10 1413

Claim(s) not searched:
        24

Reason for the limitation of the search (non-patentable invention(s)):

Article 53 (b) EPC - Animal variety

**ANNEX TO THE EUROPEAN SEARCH REPORT
ON EUROPEAN PATENT APPLICATION NO.**                    EP 07 10 1413

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2007

| Patent document cited in search report | Publication date | Patent family member(s) | Publication date |
|---|---|---|---|
| US 4007709 A | 15-02-1977 | NONE | |
| WO 2004036987 A | 06-05-2004 | AT 347802 T | 15-01-2007 |
| | | AU 2003272157 A1 | 13-05-2004 |
| | | CA 2498841 A1 | 06-05-2004 |
| | | EP 1553823 A1 | 20-07-2005 |
| | | NO 318733 B1 | 02-05-2005 |
| | | NZ 538811 A | 30-11-2006 |
| | | US 2005284395 A1 | 29-12-2005 |
| WO 03026406 A | 03-04-2003 | EP 1435772 A1 | 14-07-2004 |
| | | JP 2005502382 T | 27-01-2005 |
| | | US 2004211367 A1 | 28-10-2004 |